# EUROPÄISCHE PATENTSCHRIFT

(11) **EP 0 765 293 B1**
(45) Veröffentlichungstag und Bekanntmachung des Hinweises auf die Patenterteilung: **26.08.1998**
(21) Anmeldenummer: 95919601.5
(22) Anmeldetag: 12.06.1995
(51) Int. Cl.: C02F 3/06, C02F 3/10, B01D 67/00

(54) **BIOLOGISCHE REINIGUNGSVORRICHTUNG UND VERFAHREN ZUR ABWASSERREINIGUNG UNTER VERWENDUNG DERSELBEN**
BIOLOGICAL PURIFICATION DEVICE AND A METHOD OF PURIFYING EFFLUENT USING SAID DEVICE
DISPOSITIF D'EPURATION BIOLOGIQUE ET PROCEDE D'EPURATION D'EAUX USEES FAISANT APPEL AUDIT DISPOSITIF

(30) Priorität: 15.06.1994 CH 1894/94
(43) Veröffentlichungstag der Anmeldung: 02.04.1997
(73) Patentinhaber: Weikmann, Günther, D-89257 Illertissen (DE)
(72) Erfinder: Weikmann, Günther, D-89257 Illertissen (DE)
(74) Vertreter: Révy von Belvárd, Peter
(86) Internationale Anmeldenummer: IB9500465
(87) Internationale Veröffentlichungsnummer: WO9534509

(56) Entgegenhaltungen:
- EP-A- 0 317 399
- EP-A- 0 477 831
- WO-A-88/09615
- DE-A- 3 827 716
- DE-A- 4 030 376
- FR-A- 2 077 183

## Beschreibung

Die Erfindung bezieht sich auf eine Vorrichtung nach dem Oberbegriff des Anspruches 1 und auf ein Verfahren nach dem Oberbegriff des Anspruches 8.

Bei der Reinigung von Abwässern ist es bekannt, zum Abbau von Schadstoffen Mikroorganismen zu verwenden. Diese biologischen Abwasserreinigungsverfahren schaffen die Voraussetzung, die anfallenden Schadstoffe in der Form von ungefährlichen Abbauprodukten wieder dem natürlichen Kreislauf zuzuführen, oder das aufbereitete Abwasser erneut als Prozesswasser zu verwenden. Die in Frage kommenden Mikroorganismen gehören zu einem breiten Spektrum aus Bakterien und gegebenenfalls auch aus Pilzen. Um störende Geruchsentwicklungen zu vermeiden werden häufig aerobe Abbauprozesse bevorzugt. Zudem weisen Bakterienpopulationen im aeroben Milieu eine grosse Adabtationsfähigkeit an variable Abwasserzusammensetzungen auf. So kann sich etwa aerober belebter Schlamm innerhalb von Stunden oder höchstens Tagen auf Substanzen einstellen, für die zuvor keine Abbaufähigkeit gegeben war. Die Abbauprozesse und die dazu eingesetzten Mikroorganismen sind jeweils den zu reinigenden Abwässern angepasst.

Um optimale Abbauleistungen zu erreichen, ist es nicht nur wichtig eine den Abwässern entsprechende Zusammensetzung von Mikroorganismen, bzw. Biozönosen, zu verwenden, sondern es ist auch von Bedeutung, wie die Mikroorganismen angeordnet sind. So sind etwa trägerfixierte Mikroorganismen schneller verfügbar als Mikroorganismen im Belebtschlamm. Trägerfixierte Bakterien sind in der Form von Biofilmen mit einer Dicke von 0.1 bis 0.5 mm am effizientesten für Reinigungszwecke einsetzbar. Ein derartiger Biofilm haftet fest an seiner Unterlage und es besteht nicht die Gefahr, dass, wie etwa in dickeren Filmen, absterbende Bakterien zum stellenweisen Ablösen des Biofilmes führen oder den aktiven Biofilm bzw. Biorasen überlagern und seine Aktivität verhindern.

Bei den bekannten Festbettreaktoren sind im wesentlichen zwei Gruppen zu unterscheiden. Bei der einen Gruppe handelt es sich um Durchlaufreaktoren mit Zwangsführung des Abwassers unter Vermeidung von Kurzschlussströmungen. Diese Reaktoren haben eine kleine Oberfläche relativ zum Volumen des Durchlaufreaktors. Zudem muss die Durchlaufzeit optimal eingestellt werden, da diese von der Art und Konzentration der Schadstoffe, sowie dem erforderlichen Reinigungsgrad abhängt. Das Einstellen der optimalen Durchlaufzeit ist zumindest in Anwendungen mit variablen Zu- und/oder Abflussmengen nicht mit kleinem Aufwand möglich.

Bei der anderen Gruppe handelt es sich um Festbetten mit grösstmöglichen Oberflächen, wie etwa Kiesschüttungen. Die in dieser Reaktorgruppe entstehenden engen Zwischenräume haben zahlreiche Nachteile. Der Biofilm ist schlecht belüftbar. Die Schüttung bildet einen grosser Widerstand gegen das Durchströmen des Abwassers. Durch die Verschlammung der Zwischenräume nimmt der Widerstand zu und die Abbauleistung ab. Ein häufiges Auswechseln der Schüttung ist mit häufigen Betriebsunterbrüchen und jeweils mit dem Verlust der aktiven Bakterienzusammensetzung verbunden..

Wenn nun etwa ein Festbettreaktor bei der Aufbereitung von Abwasser aus der Autoreinigung verwendet werden soll, so muss er beispielsweise in einen geschlossenen Wasser-Kreislauf toxische oder unerwünschte Kohlenwasserstoff-Verbindungen abbauen und das Abwasser dabei zu wieder verwendbarem Prozesswasser aufarbeiten. Variabel anfallendes Abwasser muss mit einer grossen Reinigungsleistung ohne komplizierte Steuerung und mit minimalem Wartungsaufwand gereinigt werden. Die Praxis hat gezeigt, dass die bekannten Durchlaufreaktoren und Schüttungen dazu ungeeignet sind. Die bekannten Festbettreaktoren haben entweder im Verhältnis zu ihrem Platzbedarf zu wenig Oberfläche, oder zu enge, verschlammende Zwischenräume. Zudem würden wegen des variablen Abwasseranfalls Probleme auftreten.

Aus der WO 88/09615 ist ein Biofilter bekannt, bei dem durch das Eintragen von Luft eine Durchströmung von unten nach oben angeregt wird.

Die erfindungsgemässe Aufgabe besteht nun darin ein Verfahren und einen biologischen Filter mit Mikroorganismen zum Reinigen von Schmutzwasser zu beschreiben, so dass Schadstoffe möglichst vollständig abgebaut werden ohne das Entstehen von unangenehmen Gerüchen und ohne Beeinträchtigung der Reinigungswirkung durch Verschlammung.

Zur Lösung der Aufgabe wird ein biologischer Festbettreaktor mit immobilisierten, vorzugsweise aeroben Mikroorganismen, insbesondere Bakterien, verwendet, der so ausgebildet ist, dass ein im Verhältnis zum Festbettvolumen möglichst grossflächiger Biofilm entsteht, und dass abgestorbenes Biomaterial, insbesondere Schlamm, aus dem Biofilter ausspülbar ist, indem von einer Spüldüse Flüssigkeit ausgestossen oder angesaugt wird. Die Fläche, die als Biofilmunterlage verwendet wird, besteht aus den Oberflächen von im Festbettvolumen angeordneten Trägerteilen. Dabei beträgt das Volumen aller Trägerteile maximal 50% des gesamten Festbettvolumens, so dass zwischen den Teilen ein Freiraum von mindestens 50% des Festbettvolumens für den Biofilm und die verunreinigte Flüssigkeit frei bleibt. Aufgrund der Ausspülbarkeit des Biofilters kann verhindert werden, dass dessen Durchströmbarkeit und Abbauleistung durch Verschlammung beeinträchtigt wird. Die Reinigungsmöglichkeit gewährleistet eine lange Betriebsdsauer, ohne dass die Trägerteilchen ausgeräumt, bzw. ausgewechselt werden müssen.

Die lange Betriebsdauer ist besonders wichtig, weil das Aufbauen eines optimalen Biofilms kritisch und zeitaufwendig ist. Erst nach dem Durchlaufen einer Induktions- und einer Wachstumsphase wird die Plateauphase mit einem Gleichgewicht zwischen Neubildung und Ablösung des Biofilms erreicht. Um variable Verschmutzungsanteile gut abbauen zu können, muss in der Induktions- und in der Wachstumsphase ein Biofilm aus komplexen, auf die Anwendung abgestimmten, Mikroorganismengemischen, bzw. Mischbiozönosen, aufgebaut werden. Diese Mischbiozönosen dürfen nicht auf Randbereiche, bzw. einzelne gut durchströmte Freiraumbereiche beschränkt sein. Ein genügend grosser Freiraumanteil und eine im wesentlichen gleichmässige Verteilung des Freiraums im gesamten Filtervolumen ist bereits in der Induktionsphase, also beim anfänglichen Besiedeln der Trägerteilchen mit Mikroorganismen wichtig. Die gleichmässige Durchströmbarkeit des Freiraumes gewährleistet in der Wachstumsphase ein gleichmässiges Anwachsen des Biofilms auf allen Trägerteilchen und in der Plateau-, bzw. konstanten Betriebsphase eine grösstmögliche Abbauleistung.

Trägerteile mit unregelmässiger, bzw. stark strukturierter Oberfläche, im Sinne von Fortsätzen, Vertiefungen und welligen, insbesondere spiralförmigen Oberflächenteilen, die ungeordnet im Filtervolumen angeordnet sind, führen dazu, dass die durchströmende Flüssigkeit zumindest kleinräumig stark durchwirbelt ist und in vielfältigen Kontakt mit dem Biofilm auf den Trägerteilchen gelangt. Weil sich auch in kleinen Filterbereichen keine laminare Hauptströmung ausbilden kann, ist die Wahrscheinlichkeit, dass jede einzelne abbaubare Verunreinigung in einen Reaktionskontakt mit dem Biofilm gelangt sehr hoch. Ein entscheidender Vorteil des erfindungsgemässen Festbettreaktors ist es, diesen intensiven Reaktionskontakt zu erzielen, ohne die durchströmbaren Freiräume so klein zu halten, dass die Verschlammung nicht mehr ausgespült werden kann.

Die Trägerteilchen bestehen vorzugsweise aus Kunststoff, insbesondere handelt es sich um abgedrehte Kunststoffspäne und/oder abgerissene Spritzgussangussteile.

Um im Festbettvolumen aerobe Bedingungen zu schaffen, ist eine Belüftungsvorrichtung vorgesehen. Dabei wird vorzugsweise unterhalb eines Reaktorvolumens mindestens eine Gaseintragsdüse angeordnet, durch welche vorzugsweise Luft, gegebenenfalls aber reiner Sauerstoff, in die Flüssigkeit direkt unter dem Reaktorvolumen eingetragen wird. Das eingetragene Gas wird zum Teil in der Flüssigkeit gelöst, zum Teil steigt es aber in der Form von Gasblasen in das Reaktorvolumen auf. Die Begasung regt durch die aufsteigenden Gasblasen auch eine Zirkulation der zu reinigenden Flüssigkeit an. Im Bereich über der mindestens einen Gaseintragsdüse steigt dabei Flüssigkeit vorzugsweise durch das Reaktorvolumen auf und ausserhalb dieses aufströmenden Flüssigkeitsbereiches senkt sich die Flüssigkeit ab. Die Begasung bewirkt somit vorzugsweise nicht nur aerobe Bedingungen im Filtervolumen, sondern auch eine Flüssigkeitszirkulation durch das Biofilter, so dass die im Behälter befindliche Flüssigkeit optimal mit dem Biofilm in Kontakt gebracht wird.

Um gegebenenfalls zu gewährleisten, dass alle Flüssigkeit mindestens einmal durch das Reaktorvolumen, bzw. in Kontakt mit dem Biofilm gelangt, wird die Anordnung des Zuflusses, des Bioreaktors und des Abflusses im Flüssigkeitsbehälter so gewählt, dass die Flüssigkeit vom Zufluss nur durch den Bioreaktor zum Abfluss strömen kann. Am einfachsten kann dies gewährleistet werden, wenn der Bioreaktor direkt an den Zufluss anschliesst oder aber vorzugsweise direkt vor dem Abfluss angeordnet ist. Bei der Anordnung direkt vor dem Abfluss können sich Feststoffanteile nach dem Eintritt in den Behälter absetzen bevor die Flüssigkeit in das Biofilter eintritt. Um sicherzustellen, dass im wesentlichen keine Schwebeteilchen, die eine minimale Grösse überschreiten, und auch kein Schlamm aus dem Bioreaktor im Reinwasser enthalten ist, wird vorzugsweise zwischen dem Bioreaktor und dem Abfluss ein physikalisches Filter angeordnet.

Da das physikalische Filter und auch der biologische Festbett-Reaktor durch zurückgehaltene Teilchen und Schlamm verstopfen, bzw. in ihrer Funktionsfähigkeit eingeschränkt, werden können, ist es zweckmässig, eine Rückspülmöglichkeit so auszulegen, dass der Festbett-Reaqktor und das physikalische Filter gemeinsam rückspülbar sind. Indem das physikalische Filter direkt als, vorzugsweise zentraler, Teil der Berandung des Bioreaktor-Volumens angeordnet ist, setzt sich eine Rückströmung durch das physikalische Filter als Rückströmung durch den Festbettreaktor fort und führt nebst den Ablagerungen am physikalischen Filter auch Schlamm aus dem Reaktorvolumen ab.

Der ausgespülte Schlamm wird durch Absetzen im Bodenbereich des Behälters gesammelt. Der Festbettreaktor befindet sich vorzugsweise in einem Abstand vom Boden des Aufnahmeraumes, sodass es genügend lange über dem abgesetzten Feststoffanteil liegt. Die anfallenden Feststoffmengen können beispielsweise bei Betriebsunterbrüchen entfernt werden. Gegebenenfalls ist am Boden des Aufnahmeraumes eine Austragsvorrichtung, wie etwa eine Absaugvorrichtung, eine verschliessbare Ablassöffnung oder eine mechanische Fördereinrichtung zum Austragen des Feststoffanteils vorgesehen. Ausgetragen werden kann kontinuierlich, während vorgegebener Zeitintervalle oder lediglich bei Feststoffmengen, die eine vorgegebene Höhe übersteigen.

Das gegebenenfalls vorgesehene physikalische Filter umfasst vorzugsweise Filtermaterial aus einer dünnen Schicht, insbesondere einer Folie, gegebenenfalls aber auch einem Gewebe, z.B. aus Polyester, mit vorbestimmter im wesentlichen einheitlicher Porengrösse. Durch die Wahl einer Folie werden die porenförmigen Durchtrittskanäle sehr kurz, sodass Schmutz- und/oder Schlammteilchen mit Querschnitten, die nur wenig kleiner sind als die Porengrösse, sich nicht in den Poren verkeilen können. Das heisst, bei Filterfolien oder entsprechend dünnen Geweben bleiben die Schmutzteilchen entweder auf der Schmutzseite oder treten, wenn sie genügend klein sind, ganz durch. Die Filterfolie bzw. das Gewebe kann durch Rückspülung im wesentlichen wieder vollständig freigespült werden.

Als physikalisches Filter wird vorzugsweise ein Mikrofiltrationsfilter mit Poren verwendet, deren Durchmesser weniger als 200µm, vorzugsweise maximal 50µm, insbesondere maximal 20µm, z.B. 0,45 bis 15µm beträgt. Die Dicke, bzw. Stärke des Mikrofiltrationsfilter ist kleiner als 200µm, vorzugsweise maximal 100µm, insbesondere maximal 50µm, gegebenenfalls maximal 25µm, bevorzugt etwa 10µm. Das Filter weist Poren im wesentlichen einheitlicher Porengrösse auf, die durch Beschuss mit einer Strahlung hergestellt sind, vorzugsweise einer Korpuskularstrahlung, insbesondere mittels der Kernspurtechnik. Ein wesentlicher Vorteil bei der Verwendung eines Mikrofiltrationsfilter besteht darin, dass keine Mikroorganismenverbände in den Reinwasserbereich, bzw. Abfluss, gelangen können. Der Abflussbereich wird somit vom Bewuchs freigehalten.

Die Filtrierbarkeit der Mikroorganismen kann durch Injektion von biologischem Flockungsmittel (im wesentlichen frei von Metallverbindungen) erhöht werden. Die biologischen Flocken, die als Polymer auf dem Markt sind, dienen zusätzlich als Trägermaterial, teilweise sogar zur Nahrung. Durch den Einsatz eines biologischen Flockungsmittels wird ausserdem eine Überpopulation von Mikroorganismen verhindert, da sie zum Teil mit den Flocken abgehen.

Die physikalischen Filterelemente, oder die Zuströmvorrichtungen zum Auslauf, sind vorzugsweise scheiben-, insbesondere quaderförmig, können aber gegebenenfalls auch prisma-, pyramiden- oder zylinderförmig sein. An die physikalischen Filter oder die Zuströmvorrichtungen anschliessende Festbettreaktor sind vorzugsweise zylinderteil-förmig, gegebenenfalls aber scheiben-, prisma-, oder pyramidenförmig ausgebildet.

Das totale biologische Reaktorvolumen, bzw. die Biofilmfläche wird dem jeweils maximalen Durchsatz angepasst. Erfindungsgemäss geschieht dies vorzugsweise durch eine modulare Parallelanordnung mehrerer Reaktoren im gleichen Aufnahmeraum. Gegebenenfalls ist jeder Reaktor an eine Auslasszweigleitung angeschlossen. Diese Leitungen sind bereits im Aufnahmeraum oder auch erst ausserhalb des Aufnahmeraumes an eine gemeinsame Auslasssammelleitung angeschlossen. Vorzugsweise ist die Sammelleitung an eine Saugpumpe angeschlossen. Die Pumpe kann beispielsweise durch einen Pegelsensor im Aufnahmeraum und eine Mess- und Steuervorrichtung jeweils ausgeschaltet werden, wenn der Pegel auf das Niveau der Reaktor-Oberkante absinkt. Gegebenenfalls sind die Zweigleitungen über Zweigventile an die Sammelleitung angeschlossen, sodass die Anzahl der zum Reinigen eingesetzten Reaktoren auch über diese Ventile eingestellt werden kann.

Um die Reaktoren mittels Rückspülung reinigen zu können, ist die Sammelleitung an eine Druckpumpe, insbesondere mit einem Sauerstoff- bzw. Luftinjektor, angeschlossen. Vorzugsweise ist die Pumprichtung der Saugpumpe mittels einer Umschalteinrichtung auf Druck umschaltbar. Zum Bereitstellen des für die Rückspülung nötigen Filtrates ist der Pumpe im Saugbetrieb ein die für die Rückspülung nötige Filtratmenge aufnehmender Rückspülbehälter zugeordnet. Um die Rückspülleistung der Pumpe relativ zur Filterfläche zu erhöhen, kann, wenn Zweigventile vorhanden sind, durch das Öffnen jeweils nur eines Zweigventiles jeder Reaktor einzeln gereinigt werden.

Erfindungsgemässe Aufnahmeräume können die verschiedensten Formen haben. Die Formgebung hängt im allgemeinen vom Anwendungsbereich ab. Die zu reinigenden Flüssigkeiten bzw. Abwässer stammen aus den verschiedensten Produktions- und Reinigungsprozessen, wie beispielsweise aus der Fahrzeugreinigung. Ein besonderer Vorteil eines erfindungsgemässen Reinigungsverfahrens und einer Filtervorrichtung ist die Tatsache, dass diese mit geringem Aufwand in bereits bestehende Anlagen eingefügt werden können. So können beispielsweise bereits bestehende Sammelbekken als Aufnahmeräume dienen.

Die Filterelemente können auf verschiedenste Arten im Aufnahmeraum angeordnet werden. Sie können beispielsweise entlang der Innenwände des Aufnahmeraumes befestigt werden. Bei dieser Anordnung ist die Befestigung äusserst einfach und ebenfalls bleibt der zentrale Bereich des Aufnahmeraumes frei, sodass der abgesetzte Feststoffanteil ohne Behinderung entnommen werden kann. Vorzugsweise werden die Reaktorelemente in regelmässigen horizontalen Abständen in einer horizontalen Schicht des ganzen Aufnahmeraumes verteilt. Die Reaktorelemente können dabei nur von den Zweigleitungen getragen werden, oder aber auch an einer Haltevorrichtung befestigt sein. Die Haltevorrichtung und der Anschluss an die Zweigleitungen sind gegebenenfalls so ausgebildet, dass ein wahlweises Einsetzen und Herausnehmen der Reaktorelemente mit geringem Arbeitsaufwand möglich wird. Vorzugsweise sind die Reaktorelemente mit ihrer grössten Ausdehnung vertikal ausgerichtet. Um die Ablagerung von Feststoffen auf horizontalen Oberflächen zu minimieren, sind die horizontalen Flächen vorzugsweise kleiner als die vertikalen.

Im folgenden wird die Erfindung anhand von lediglich einen Ausführungsweg darstellenden Figuren näher erläutert.
- Fig. 1: Vertikaler Schnitt durch eine Filtervorrichtung mit einem zentralen physikalischen und einem beidseits daran anschliessenden Festbettfilter, bzw. Reaktor.
- Fig. 2: Erfindungsgemässe Filtervorrichtung mit vier Reaktorelementen.
- Fig. 3: Festbettreaktor ohne daran anschliessende Ablaufvorrichtung.

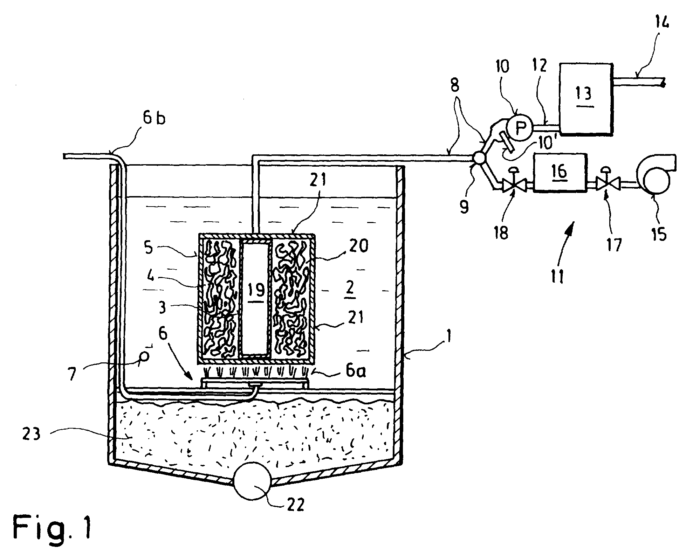

Eine Reinigungsvorrichtung gemäss der Fig. 1 umfasst im wesentlichen einen Behälter 1, dessen Innenraum den Aufnahmeraum 2 bildet, und mindestens ein zentrales physikalisches Filter 3, bzw. eine Zuströmvorrichtungen zum Auslauf, und aussen an dieses anschliessend, ein Festbett 4 des Bioreaktors 5, sowie mindestens eine Zulauföffnung 7. Zumindest unter einem Teil des Bioreaktors 5 ist eine Begasungsvorrichtung 6 angeordnet. Durch die Zulauföffnung 7 gelangt die mit Fremdstoffen und biologisch abbaubaren Substanzen verunreinigte Flüssigkeit in den Aufnahmeraum 2. Damit sich Feststoffe mit einer höheren Dichte als jener der Flüssigkeit schnell setzen können, ist die Zulauföffnung 7 vorzugsweise im unteren Bereich des Behälters 1 angeordnet. Die Filterelemente 3 und 5 und die Begasungsvorrichtung 6 sind vorzugsweise oberhalb eines bodennahen Bereiches angeordnet, sodass sich die Feststoffe unterhalb dieser ansammeln. Die Begasungsvorrichtung 6 umfasst eine Düsenvorrichtung 6a, die von einer Zuführleitung 6b gespiesen wird. Das aus der Düsenvorrichtung austretende Gas erzeugt im Festbett 4 aerobe Bedingungen.

Im Biofilm des Festbettes 4 finden nicht nur Abbauprozesse statt, sondern es werden auch Partikel vom Film und von den Trägerteilchen zurückgehalten, so dass sowohl eine Reaktor- als auch eine Filterfunktion gegeben ist.

Aus den physikalischen Filtern 3 gelangt das gereinigte Wasser in eine Abfluss-, bzw. Sammelleitung 8. Falls mehrere physikalische Filter 3 vorgesehen sind, werden diese gegebenenfalls über Zweigleitungen und Zweigventile an die Sammelleitung angeschlossen, so dass jeweils eine gewünschte Anzahl Filter benützt werden kann. Gegebenenfalls ist ein Zweiweghahn 9 vorgesehen, mittels dessen die Sammelleitung 8 entweder mit einer Pumpe 10, oder aber mit einer Druckluft-Vorrichtung 11 verbunden wird. Der Pumpe 10 kann eine schematisch angedeutete Injektoreinrichtung 10' zum Injizieren von sauerstoffhaltigem Gas, d.h. von Luft, zugeordnet sein. Diese Injektoreinrichtung 10' liegt vorzugsweise an der Druckseite der Pumpe 10.

Die Pumpe 10 arbeitet während des Reinigens im Saugbetrieb und pumpt so die Flüssigkeit vom Aufnahmeraum 2 durch die Elemente 5 und 3, die Sammelleitung 8 und eine an die Pumpe anschliessende Verbindungsleitung 12 in einen Rückspülbehälter 13. Eine Abflussleitung 14 aus dem Rückspülbehälter 13 ist auf einem höheren Niveau angeschlossen als die Verbindungsleitung 12, sodass im Rückspülbehälter 13 immer eine konstante Menge Filtrat zur Rückspülung zur Verfügung steht.

Zum Abstossen der am physikalischen Filter 3 haftenden Fremdstoffe und zum Reinigen des Festbettes 4 erfolgen vorzugsweise in zeitlichen Abständen Rückspülungen. Diese Rückspülungen können von Hand durchgeführt werden, indem die Pumpe 10 auf Druckbetrieb umgestellt und so das Filtrat vom Rückspülbehälter durch die Elemente 3 und 5 in den Aufnahmeraum 2 zurückgepumpt wird. Der Rückspülvorgang sollte beendet werden bevor der Rückspülbehälter vollständig entleert ist. Gegebenenfalls ist eine Mess- und Steuerelektronik vorgesehen, die beispielsweise mit mindestens einem Differenz-Drucksensor zur Messung des Druckunterschiedes über mindestens eines der filternden Elemente 3 oder 5 und gegebenenfalls mit einem Pegelmesser im Rückspülbehälter 13 verbunden ist. Nach vorgegebenen Zeitintervallen oder wenn der Druckunterschied aufgrund einer starken Verschmutzung des Filters 3 oder des Reaktors 5 einen vorgegebenen Wert überschreitet, so wird automatisch die Pumpe umgeschaltet und die Rückspülung durchgeführt, vorzugsweise bis das Signal des Pegelsensors einen vorgegebenen Wert unterschreitet und die Pumpe wieder umgeschaltet oder gegebenenfalls abgeschaltet wird.

Zur Ergänzung des Reinigungsvorganges steht gegebenenfalls die Druckluft-Vorrichtung 11 zur Verfügung. Sie besteht vorzugsweise aus einer Druckluftquelle 15 und gegebenenfalls einem Druckakkumulator 16, sowie aus einem ersten Ventil 17 zwischen der Druckluftquelle 15 und dem Druckakkumulator 16 und einem zweiten Ventil 18 zwischen dem Druckakkumulator 16 und dem Zweiweghahn 9. Zum Aufbau eines gewünschten Druckes im Akkumulator 16 wird der Akkumulator 16 bei geschlossenem zweiten Ventil 18 und bei offenem ersten Ventil 17 von der Druckluftquelle gespeist. Ist der gewünschte Druck erreicht, so wird das erste Ventil 17 geschlossen. Nach der Beendigung eines Rückspülvorganges kann nun gegebenenfalls noch eine Druckstossreinigung anschliessen, indem die Druckluft-Vorrichtung 11 über den Zweiweghahn 9 mit der Sammelleitung 8 verbunden und anschliessend das zweite Ventil 18 geöffnet wird. Der somit erzeugte Druckstoss presst das in der Sammelleitung 8 und den Zweigleitungen 7 vorhandene Filtrat und anschliessend Luft unter hohem Druck durch das Filter 3 und den Reaktor 5, sodass sich auch hartnäckige Ablagerungen ausgestossen werden. Nach dem Druckstoss kann durch das Öffnen des ersten Ventils 17 weitere Druckluft durch das Filter 3 und den Reaktor 5 geleitet werden.

Indem auch die Ventile 17, 18 und der Zweiweghahn 9 zur Steuerung, sowie gegebenenfalls ein Drucksensor im Druckakkumulator zum Messen an die Mess- und Steuerelektronik angeschlossen werden, kann auch die Reinigung mittels Druckluft automatisch erfolgen. Vorzugsweise wird die Mess- und Steuerelektronik noch an eine Programmiereinheit angeschlossen, die es erlaubt verschiedene Reinigungsabläufe auszuwählen, oder Reinigungsparameter, wie etwa die die Rückspülung auslösenden vorgegebenen Druckwerte, zu verändern. Gegebenenfalls sind an den Zweigleitungen Zweigventile angebracht, die ein selektives Reinigen der Elemente 3, 5 zulassen. Auch die Steuerung der Zweigventile könnte durch die Mess- und Steuerelektronik erfolgen. Falls an jedem Filterelementepaar 3, 5 mindestens ein Differenz-Drucksensor vorgesehen ist, kann für jedes Filterelementepaar 3, 5 einzeln das Erreichen einer bestimmten Verschmutzung erkannt und anschliessend durch das Schliessen aller anderen Zweigventile genau das am meisten verschmutzte Elementepaar 3, 5 gereinigt werden.

Im Innern des zentralen physikalischen Filters 3 bzw. der Zuströmvorrichtung befindet sich ein Reinwasserraum 19. Auf mindestens einer, vorzugsweise aber auf zwei Seiten des Reinwasserraumes 19 sind Durchtrittsbereiche, insbesondere physikalische Filterbereiche angeordnet. An mindestens einen Teil dieser Bereiche anschliessend ist ausserhalb des Reinwasserraumes 19 mindestens ein Festbett 4 angeordnet. In der dargestellten Ausführungsform ist auf zwei einander gegenüberliegenden Seiten des Reinwasserraumes 19 je ein, vorzugsweise halbzylinderförmiges, Festbett 4 mit Trägerteilchen 20 angeordnet. Die äussere Berandung des Festbettes 4 ist als Gitter, bzw. Sieb 21 so ausgebildet, dass die Trägerteilchen 20 nicht durchtreten können. Um den Austritt von Schlamm während des Spülvorganges nicht zu behindern, sind die Durchtrittslöcher nur wenig kleiner als das kleinste Trägerteilchen.

Im untersten Bodenbereich des Behälters 1 ist vorzugsweise eine Austragsvorrichtung 22 vorgesehen, um die in einem Absetzbereich 23 abgesetzten Feststoffe auszutragen. Bevorzugt wird eine Schlammpumpe, wie eine Exzenterschneckenpumpe, gegebenenfalls aber eine Förderschnecke eingesetzt.

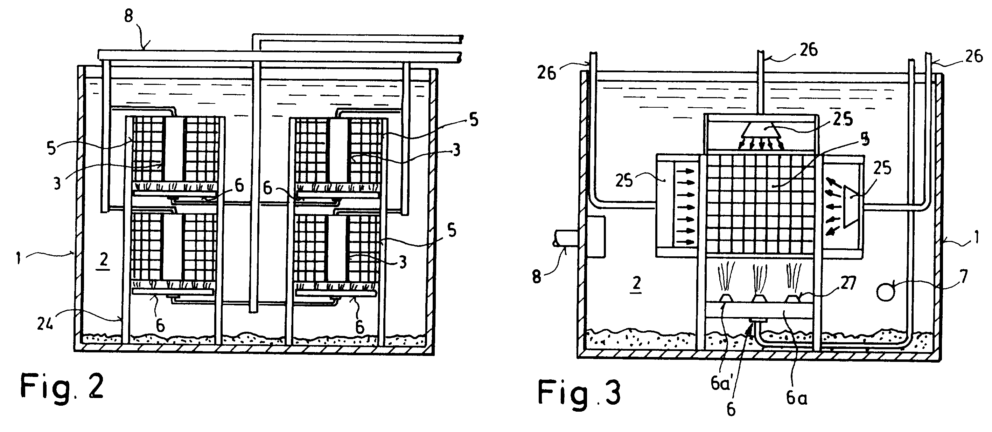

Bei einer weiteren erfindungsgemässen Ausführungsform ist gemäss Fig. 2 die Anordnung von Filterelementepaaren 3, 5 in regelmässigen Abständen im wesentlichen in mindestens einer, vorzugsweise aber in zwei, horizontalen Schichten des gesamten Aufnahmeraumes 2 vorgesehen. Diese Anordnung erhöht die gesamte wirksame Filterfläche und vergleichmässigt auch die sich bei der Rückspülung bzw. der Druckluftreinigung von den Filterelementepaaren 3, 5 lösenden und sich unter diesen Filterelementen 3 bzw. 5 anhäufenden Fremdstoffablagerungen. Um die gesamte Filterfläche an die nötigen Durchflussmengen anzupassen, kann auch nur ein Teil der Filterelementepaare 3, 5 eingesetzt sein.

Die Filterelementepaare 3, 5 sind über Stützen 24 mit dem Behälterboden verbunden. Gegebenenfalls ist eine Halterung an den Behälterwänden, oder vom oberen Behälterrand aus vorteilhaft. Jedem Festbettreaktor 5 ist eine Begasungsvorrichtung 6 zugeordnet.

Die Reinigungsvorrichtung gemäss Fig. 3 weist in einem Behälter 1 einen Festbettreaktor 5 ohne Anschluss an eine Abflussleitung 8 auf. Zufluss 7 und Abfluss 8 sind vorzugsweise an Seitenwände des Behälters 1 angeordnet. Unterhalb des Festbettreaktors ist vorzugsweise die Begasungsvorrichtung 6 mit einer Düsenvorrichtung 6a angeordnet. Um das Eintreten von absinkenden Feststoff- oder Schlammpartikeln in die Düsenvorrichtung 6a zu verhindern, sind die einzelnen Düsen 6a' vorzugsweise mit Schliessklappen 27 versehen, welche die Düsenöffnungen verschliessen, wenn kein Gas austritt.

Um eine Durchspülung des Festbettreaktors 5 zu ermöglichen, ist mindestens eine seitlich vom und/oder über dem Filter 5 angeordnete Spülvorrichtung 25 vorgesehen. Die Spülvorrichtung umfasst eine Spüldüsenvorrichtung, die an eine Spülleitung 26 angeschlossen ist. Die Spülströmungen können sowohl durch das Ausspritzen als auch durch das Ansaugen von Flüssigkeit angeregt werden. Vorzugsweise ist eine Spülvorrichtung, wie sie in der Fig.1 dargestellt ist, vorgesehen.

## Patentansprüche

1. Biologische Reinigungsvorrichtung für eine Flüssigkeit mit
a) einem Behälter (1);
b) mindestens einem Festbettreaktor (5) mit einem auf einer Trägerfläche haftenden Biofilm aus Mikroorganismen, wobei der Festbettreaktor (5) in einem Teilbereich des Behälters (1) so angeordnet ist, dass unterhalb des Festbettreaktors (5) im Behälter (1) Feststoffe absetzbar sind;
c) einer Begasungsvorrichtung (6) zum Erzeugen von aeroben Bedingungen zumindest in einem Bereich des Festbettreaktors (5),
**dadurch gekennzeichnet,** dass
d) die Trägerfläche von einer Vielzahl von Trägerteilen (20) gebildet wird, welche ungeordnet innerhalb einer äusseren mit Durchtrittsöffnungen versehenen Berandungsfläche (21) des Festbettreaktors (5) gehalten sind;
e) mindestens 50% des Volumens innerhalb der äusseren Berandungsfläche (21) als Freiraum zwischen den Trägerteilen (20) ausgebildet ist und;
f) eine Spülvorrichtung (8-18,25,26) mit einer Pumpvorrichtung (10), mindestens einer Leitung (8,26) und zumindest einer daran angeschlossenen Spüldüse (3,25) vorgesehen ist, wobei Flüssigkeit durch die Leitung (8,26) zwischen der Pumpvorrichtung (10) und der Spüldüse (3,25) pumpbar ist, welche Flüssigkeit eine Spülströmung durch den Festbettreaktor (5) erzeugt, durch die der Festbettreaktor (5) so spülbar ist, dass abgestorbene Mikroorganismen bzw. Bioschlamm aus dem Festbettreaktor (5) entfernbar sind bzw. ist.

2. Biologische Reinigungsvorrichtung nach Anspruch 1, dadurch gekennzeichnet, dass die Trägerteile (20) aus Kunststoff bestehen und dass sie vorzugsweise als abgedrehte Kunststoffspähne und/oder abgerissene Spritzgussangussteile ausgebildet sind.

3. Biologische Reinigungsvorrichtung nach Anspruch 1 oder 2, dadurch gekennzeichnet, dass mindestens ein Festbettreaktor (5) an ein physikalisches Filter (3) anschliesst und vorzugsweise das physikalische Filter (3) mit einer Auslassleitung (8) verbunden ist.

4. Biologische Reinigungsvorrichtung nach Anspruch 3, dadurch gekennzeichnet, dass das physikalische Filter (3) als Mikrofiltrationsfilter mit Poren ausgebildet ist und mindestens eines der folgenden Merkmale vorgesehen ist
a) die im wesentlichen einheitliche Porengrösse beträgt weniger als 200µm, bevorzugt maXIMAL 100µM, vorzugsweise maximal 50µm, insbesondere maximal 20µm, z.B. 0,45 bis 15µm;
b) das Mikrofiltrationsfilter (3) weist eine Stärke von weniger als 200µm, vorzugsweise maximal 100µm, insbesondere maximal 50µm, gegebenenfalls maximal 25µm, bevorzugt von etwa 10µm auf;
c) das Mikrofiltrationsfilter (3) weist Poren im wesentlichen einheitlicher Porengrösse auf, die durch Beschuss mit einer Strahlung hergestellt sind, vorzugsweise einer Korpuskularstrahlung, insbesondere mittels der Kernspurtechnik;
d) das Mikrofiltrationsfilter (3) besteht aus einem Gewebe, z.B. aus Polyester, mit einheitlicher Maschenweite bzw. Dichte von weniger als 250 µm.

5. Biologische Reinigungsvorrichtung nach einem der Ansprüche 1 bis 4, dadurch gekennzeichnet, dass die Berandung (21) des Festbettreaktors (5) zumindest teilweise aus gitterförmigen und/oder siebförmigen Bereichen besteht, deren Durchtrittslöcher kleiner sind als das kleinste Trägerteilchen (20).

6. Biologische Reinigungsvorrichtung nach einem der Ansprüche 1 bis 5, dadurch gekennzeichnet, dass eine Begasungsvorrichtung (6) vorgesehen ist, die eine Düsenvorrichtung (6a), vorzugsweise unterhalb eines Festbettreaktors (5), und eine Speiseleitung (6b) zum Speisen der Gasdüse (6a) mit Gas umfasst.

7. Biologische Reinigungsvorrichtung nach Anspruch 6, dadurch gekennzeichnet, dass die Düsenvorrichtung (6a) Schliessklappen (27) aufweist, welche die Düsen (6a') verschliessen, wenn kein Gas austritt.

8. Verfahren zur Abwasserreinigung mit einem Reinigungsschritt in einer biologischen Reinigungsvorrichtung nach Anspruch 1 mit einem Behälter (1) und mindestens einem darin angeordneten Festbettreaktor (5) mit einem auf einer Trägerfläche haftenden Biofilm aus Mikroorganismen, wobei
a) im Behälter eine Strömung angeregt wird, die Abwasser durch den Festbettreaktor (5) führt;
b) im wesentlichen unterhalb des Festbettreaktors (5) sauerstoffhaltiges Gas in das Abwasser eingetragen wird;
**dadurch gekennzeichnet,** dass
c) das Abwasser in den Behälter (1) eingeleitet wird;
d) gereinigtes Wasser in einem mittleren Tiefenbereich des Behälters (1) aus diesem abgeleitet wird; und
e) zeitweise durch Flüssigkeit, die aus Spüldüsen (3,25) ausgestossen oder von diesen angesaugt wird, eine starke Durchströmung des Festbettreaktors (5) erzielt wird, so dass abgestorbene Mikroorganismen und damit verbundener Schlamm aus dem Festbettreaktor (5) ausgespült wird.

9. Verfahren nach Anspruch 8, dadurch gekennzeichnet, dass wenigstens eine der folgenden Massnahmen durchgeführt wird:
a) das zu reinigende Wasser wird permanent oder in zeitlichen Abständen, z.B. gesteuert, über das Trägermaterial des Reaktors (5) geführt;
b) das Filtrat wird dadurch gewonnen, indem trübes Wasser zwangsweise durch das Trägermaterial für Biofilm bzw. Biorasen hindurch zum, zweckmässig beidseitig ansaugenden, Filter geführt wird;
c) es wird eine, insbesondere zusätzliche, Überspülung des Trägermateriales durch sporadische Rückspülung eines physikalischen Filters erzielt.

## Claims

1. Biological treatment apparatus for a fluid comprising
a) a tank (1);
b) at least one fixed-bed reactor (5) having a bio-film consisting of micro-organisms adhering on a carrier surface, the fixed-bed reactor (5) being arranged in a sub-region of the tank (1) in a manner allowing solid materials to be deposited beneath the fixed-bed reactor (5) in the tank (1);
c) an aerating device (6) for generating aerobic conditions at least in one region of the fixed-bed reactor (5);
**characterised in that**
d) the carrier surface is formed by a large number of carrier elements (20) which are held randomly within an external, fixed-bed reactor (5) bounding surface (21) which is provided with passages;
e) at least 50% of the volume within the external bounding surface (21) is in the form of space between the carrier elements (20); and
f) there is provided a flushing device (8-18, 25, 26) with a pumping device (10), at least one line (8, 26) and at least one flushing nozzle (3, 25) connected to the latter, it being possible to pump fluid through the line (8, 26) between the pumping device (10) and the flushing nozzle (3, 25), said fluid generating a scavenging flow through the fixed-bed reactor (5) by means of which the fixed-bed reactor (5) can be flushed in such a manner that dead micro-organisms and biological sludge can be removed from the fixed-bed reactor (5).

2. Biological treatment apparatus according to claim 1, characterised in that the carrier elements (20) are made of plastic and that they are preferably in the form of slivers of machined plastics waste and/or injection moulding sprue parts that have snapped.

3. Biological treatment apparatus according to claim 1 or 2, characterised in that at least one fixed-bed reactor (5) is connected downstream of a physical filter (3) and preferably the physical filter (3) is linked to a discharge line (8).

4. Biological treatment apparatus according to claim 3, characterised in that the physical filter (3) is in the form of a micro-filtration filter with pores and at least one of the following features is provided:
a) the substantially uniform pore size is less than 200 µm, preferably a maximum of 100 µm, more preferably a maximum of 50 µm, in particular a maximum of 20 µm, e.g. 0.45 to 15 µm;
b) the micro-filtration filter (3) has a thickness of less than 200 µm, more preferably a maximum of 100 µm, in particular a maximum of 50 µm, if appropriate a maximum of 25 µm, preferably around 10 µm;
c) the micro-filtration filter (3) has pores of substantially uniform pore size, which are produced by bombardment with radiation, preferably particle radiation, and in particular using the nuclear trace technique;
d) the micro-filtration filter (3) consists of a textile fabric, e.g. polyester, with a uniform mesh width or density of less than 250 µm.

5. Biological treatment apparatus according to any of claims 1 to 4, characterised in that the boundary edging (21) of the fixed-bed reactor (5) consists at least in part of grating-type and/or sieve-type areas the through-holes of which are smaller than the smallest carrier particle (20).

6. Biological treatment apparatus according to any of claims 1 to 5, characterised in that an aerating device (6) is provided which comprises a tuyere device (6a), preferably beneath a fixed-bed reactor (5), and a feeder line (6b) for supplying the gas tuyere (6a) with gas.

7. Biological treatment apparatus according to claim 6, characterised in that the tuyere device (6a) features closure flaps (27) which shut the tuyeres (6a') when no gas is emerging.

8. Method for the purification of sewage water using a treatment stage in biological treatment apparatus according to claim 1 comprising a tank (1) and at least one fixed-bed reactor (5) arranged therein with a bio-film consisting of micro-organisms adhering on a carrier surface, involving
a) inducing a flow in the tank which conducts the sewage water through the fixed-bed reactor (5);
b) charging oxygenic gas into the sewage water substantially beneath the fixed-bed reactor (5);
**characterised by**
c) passing the sewage water into the tank (1);
d) diverting purified water from the tank (1) in a central bottom region thereof; and
e) accomplishing a vigorous through-flow through the fixed-bed reactor (5) intermittently using fluid that is expelled from flushing jets (3, 25) or sucked in from the latter, with the result that dead micro-organisms and sludge associated therewith is flushed out of the fixed-bed reactor (5).

9. Method according to claim 8, characterised in that at least one of the following measures is implemented:
a) the water to be purified is conducted over the carrier material of the reactor (5) permanently or at chronological intervals, e.g. in controlled fashion;
b) the filtrate is recovered by forcing cloudy water through the carrier material for the bio-film or bio-lawn to the filter, which ideally is adapted for suction on both sides;
c) overwashing of the carrier material, more particularly additional overwashing, is achieved by sporadic backwashing of a physical filter.

## Revendications

1. Dispositif d'épuration biologique pour liquides, avec :
a) une cuve (1);
b) au moins un réacteur à lit fixe (5) avec un film biologique constitué de micro-organismes adhérant à une surface de support, le réacteur à lit fixe (5) étant situé dans une partie de la zone de la cuve (1) de façon à ce que des solides puissent se déposer dans la cuve (1), sous le réacteur à lit fixe (5);
c) un gazéifieur (6) pour créer des conditions aérobies, au moins dans une zone du réacteur à lit fixe (5),
caractérisé en ce que :
d) la surface de support est constituée d'une multiplicité de fragments supports (20) retenus de manière désordonnée à l'intérieur d'une surface d'encadrement (21) extérieure du réacteur à lit fixe (5) pourvue d'orifices de passage;
e) au moins 50 % du volume qui se trouve à l'intérieur de la surface d'encadrement extérieure (21) est conçu en tant qu'espace libre entre les fragments supports (20); et
f) on prévoit un dispositif de rinçage (8-18, 25, 26) comprenant un dispositif de pompage (10), au moins une conduite (8, 26) et au moins une lance de rinçage (3, 25) raccordée à cette dernière, du liquide pouvant être pompé au travers de la conduite (8, 26) entre le dispositif de pompage (10) et la lance de rinçage (3, 25), lequel liquide génère un écoulement de rinçage au travers du réacteur à lit fixe (5), et grâce auquel le réacteur à lit fixe (5) peut être rincé de telle façon que des micro-organismes morts ou de la boue biologique peuvent être évacués du réacteur à lit fixe (5).

2. Dispositif d'épuration biologique selon la revendication 1, caractérisé en ce que les fragments supports (20) sont faits de plastique et en ce qu'ils sont constitués, de préférence, par des copeaux de tournage en plastique et/ou par des fragments de carottes de moulage par injection.

3. Dispositif d'épuration biologique selon la revendication 1 ou 2, caractérisé en ce qu'au moins un réacteur à lit fixe (5) fait suite à un filtre physique (3) et en ce que le filtre physique (3) est raccordé, de préférence, à une conduite de décharge (8).

4. Dispositif d'épuration biologique selon la revendication 3, caractérisé en ce que le filtre physique (3) est réalisé sous forme de filtre de microfiltration, avec des pores, et en ce qu'au moins une des caractéristiques suivantes est prévue :
a) la grosseur de pores, dans son ensemble régulière, est de moins de 200 µm, de préférence de 100 µm maximum, préférentiellement de 50 µm maximum, en particulier de 20 µm maximum, le cas échéant de 20 µm maximum, p.ex. de 0,45 à 15 µm;
b) le filtre de microfiltration (3) présente une épaisseur de moins de 200 µm, préférentiellement de 100 µm maximum, en particulier de 50 µm maximum, le cas échéant de 25 µm maximum, de préférence de 10 µm environ;
c) le filtre de microfiltration (3) présente des pores de grosseur régulière dans son ensemble, qui ont été réalisés par bombardement avec un rayonnement, de préférence un rayonnement corpusculaire, en particulier à l'aide de la technique par traces nucléaires;
d) le filtre de microfiltration (3) est fait dans un tissu, p.ex. en polyester, de largeur de mailles régulière, ou d'un calibre inférieur à 250 µm.

5. Dispositif d'épuration biologique selon l'une quelconque des revendications 1 à 4, caractérisé en ce que l'encadrement (21) du réacteur à lit fixe (5) se compose, au moins en partie, de zones en forme de grille et/ou de tamis, dont les trous de passage sont plus petits que le plus petit fragment support (20).

6. Dispositif d'épuration biologique selon l'une quelconque des revendications 1 à 5, caractérisé en ce qu'on prévoit un gazéifieur (6) qui comprend un système de lances (6a), de préférence en dessous d'un réacteur à lit fixe (5), et un système d'alimentation (6b) destiné à alimenter en gaz les lances à gaz (6a).

7. Dispositif d'épuration biologique selon la revendication 6, caractérisé en ce que le système de lances (6a) présente des clapets de fermeture (27) qui ferment les lances (6a') lorsqu'il ne sort pas de gaz.

8. Procédé d'épuration d'eaux usées avec une opération d'épuration dans un dispositif d'épuration biologique conforme à la revendication 1, avec une cuve (1) et au moins un réacteur à lit fixe (5) disposé dans cette dernière et comprenant un film biologique de micro-organismes adhérant à une surface support, procédé selon lequel :
a) on provoque dans la cuve un écoulement qui conduit les eaux usées au travers du réacteur à lit fixe (5);
b) on apporte dans les eaux usées du gaz chargé d'oxygène, pour l'essentiel en dessous du réacteur à lit fixe (5);
caractérisé en ce que :
c) on introduit les eaux usées dans la cuve (1);
d) de l'eau épurée se trouvant dans une zone de profondeur moyenne de la cuve (1) est évacuée de cette dernière; et
e) on assure par intermittence un brassage énergique du réacteur à lit fixe (5), par du liquide projeté par les lances de rinçage (3, 25) ou pompé par ces dernières, de façon à ce que des micro-organismes morts et de la boue liée à ceux-ci soient évacués du réacteur à lit fixe (5), par rinçage.

9. Procédé selon la revendication 8, caractérisé en ce qu'on exécute au moins l'une des mesures suivantes :
a) l'eau à épurer est conduite de manière permanente ou avec des intervalles dans le temps, p.ex. en contrôlant, au dessus du matériau support du réacteur (5);
b) le filtrat est obtenu en conduisant de l'eau trouble de manière forcée au travers du matériau support pour le film biologique ou le gazon biologique, vers le filtre qui aspire avantageusement des deux côtés;
c) un surrinçage, en particulier supplémentaire, du matériau support est assuré par un décolmatage sporadique d'un filtre physique.
